# EUROPEAN PATENT APPLICATION

(11) **EP 3 566 883 A1**
(43) Date of publication of application: **13.11.2019**
(21) Application number: 17889607.2
(22) Date of filing: 17.04.2017
(51) Int. Cl.: B60C 9/00, B60C 9/18, B29C 47/14, B29D 30/38

(54) **METHOD OF USING CORRUGATED ZERO-DEGREE BELT TO MANUFACTURE TIRE**

(30) Priority: 03.01.2017 CN 201710001037
(71) Applicant: Shandong Linglong Tyre Co. Ltd., Yantai, Shandong 265406 (CN)
(72) Inventor: WANG, Feng, Yantai Shandong 265406 (CN); LIU, Lianbo, Yantai Shandong 265406 (CN); JIANG, Yi, Yantai Shandong 265406 (CN); LIU, Guixia, Yantai Shandong 265406 (CN); WEN, Xiaowei, Yantai Shandong 265406 (CN); WANG, Shaojing, Yantai Shandong 265406 (CN)
(74) Representative: Grünecker Patent- und Rechtsanwälte PartG mbB
(86) International application number: PCT/CN2017/080743
(87) International publication number: WO 2018/126552

(57) **Abstract**

Provided is a method of using a corrugated zero-degree belt (14) to manufacture a tire. A belt ply structure comprises a No. 1 belt ply (11), a No. 2 belt ply (12), a No. 3 belt ply (13), a corrugated zero-degree belt (14), and a shoulder wedge (15). In a belt ply structure of an all-steel radial tire, a zero-degree belt has a halved density and is wound in two turns. The upper ply and the lower ply are arranged in a staggered manner, thereby forming a single belt. Since each steel cord is wound in two turns, a strength problem of a joint portion is solved. The belt ply structure realizes restraining and fastening functions of a zero-degree belt ply while reducing costs and a weight of a tire. What is more important is that the entire belt ply is flat and smooth and has a consistent thickness. The belt ply structure can improve high-speed performance and abrasion resistance of a tire. Moreover, circumferential distribution of a framework material is more uniform, thereby enhancing uniformity of the tire and driving comfort.

## Description

### Technical field

The present invention belongs to the technical field of tire, and in particular relates to a method of using corrugated zero-degree belt to manufacture a tire.

### Background technology

The present tires adopt the corrugated 3+0 belt structure, in which a belt ply I, a belt ply II, a belt ply III are sequentially arranged, two layers of the same zero-degree belt ply 4 are wound, and a shoulder wedge 5 is placed under the belt layers. The zero-degree belt ply employs two layers of the same structure, and the material cost is therefore high. The entire belt ply is thin in the middle and thick on both sides. The difference in tension between the middle and the edge of the pneumatic belt ply is large, and the stress is concentrated. The abnormal wear and excessive heat generated easily during use results in separation at shoulder.

### Contents of the Invention

Aiming at the shortcomings of the existing technology, the present invention provides a method of using corrugated zero-degree belt to manufacture a tire. The invention achieves corrugated zero-degree belt wound structure by designing a novel zero-degree belt and using a particular manufacturing method. The stress at the ends of the zero-degree belt ply is reduced and the uniformity of the tension of the belt ply is maintained. This belt structure can greatly improve high-speed performance and abrasion resistance of a tire. Moreover, circumferential distribution of a framework material is more uniform, thereby enhancing uniformity of the tire and driving comfort.

The belt ply structure described in the present invention comprises a No. 1 belt ply, a No. 2 belt ply, a No. 3 belt ply, a corrugated zero-degree belt, and a shoulder wedge.

The method of using corrugated zero-degree belt to manufacture a tire described in the present invention, comprising the steps of:
(1) Preparing corrugated belt strips: design special extrusion die to extrude corrugated belt strips with density lower than ordinary zero-degree belt ply;
(2) Reeling up corrugated belt strips: the extruded corrugated zero-degree belt ply is wrapped and reeled up by a plastic film with better preservation effect;
(3) Jointing belt ply: centring the first, second and third belt plies according to the normal belt structure;
(4) Winding corrugated zero-degree belt: the first layer of corrugated belt is wound at the corresponding belt ply position, and the first layer of corrugated belt ply is wound by the winding machine at an angle of 0° -2° with the crown center;
(5) Using the method in the step (4) to wind the second layer of the corrugated belt, and the upper ply and the lower ply are arranged in a staggered manner to form a belt ply with closely doubled density of a single layer, and the end of the belt strips are overlapped by 0-30mm.

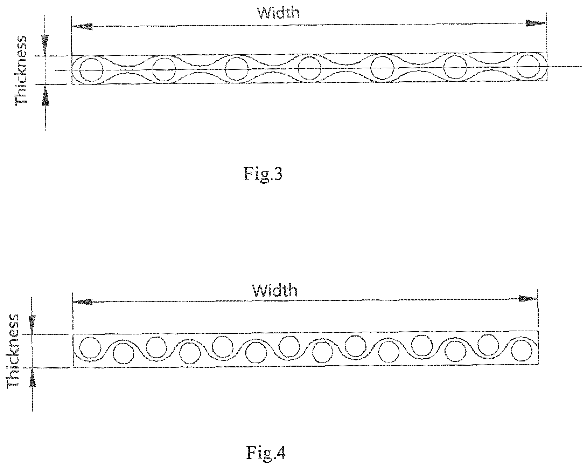

As shown in Figure 3, a belt strip with width of 25-50mm (35mm is preferred), and halved density of the ordinary product is prepared using the new extrusion die.

Parallel winding is carried out above, below, or between the belt plies along the circumferential direction of the tire.

The upper ply and the lower ply are arranged in a staggered manner, and the dislocation value is half of the distance between the centers of two adjacent cords in the single layer belt;

Belt ply overlapping mode: For the winding structure above the belt plies, the overlapping length is also 30mm based on the existing form of the corrugated belt ply. For the structure below or between the belt plies, the two ends of the belt strip are at the same level, forming a complete cycle.

The present invention relates to a belt ply structure of an all-steel radial tire, a zero-degree belt has a halved density and is wound in two turns. The upper ply and the lower ply are arranged in a staggered manner, thereby forming a single belt. Since each steel cord is wound in two turns, a strength problem of a joint portion is solved. The belt ply structure realizes restraining and fastening functions of a zero-degree belt ply while reducing costs and a weight of a tire. What is more important is that the entire belt ply is flat and smooth and has a consistent thickness. The belt ply structure can greatly improve high-speed performance and abrasion resistance of a tire. Moreover, circumferential distribution of a framework material is more uniform, thereby enhancing uniformity of the tire and driving comfort.

### Brief description of the figures

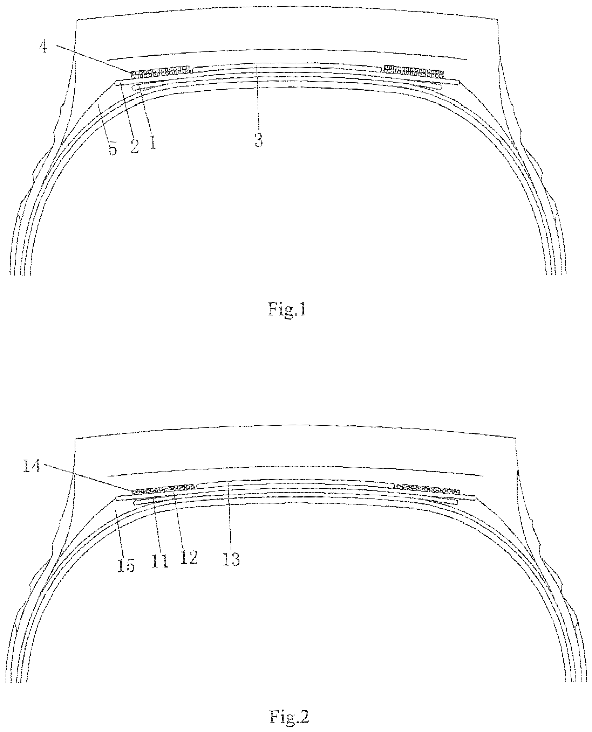

Figure 1 is the ordinary 3+0 belt structure in the prior art;
Figure 2 is the belt ply structure of a pneumatic all-steel radial tire described in the present invention;
Figure 3 is a belt strip described in the present invention;
Figure 4 is the structure of the upper belt and the lower belt arranged in a staggered manner described in the present invention;

In the figures: 1. Belt ply I, 2. Belt ply II, 3. Belt ply III, 4. Zero-degree belt winding, 5. Shoulder wedge, 11. No. 1 belt ply, 12. No. 2 belt ply, 13. No. 3 belt ply, 14. Corrugated zero-degree belt, 15. Shoulder wedge.

### Specific embodiments

A belt ply structure of a pneumatic all-steel radial tire. The belt ply structure comprises a No. 1 belt ply 11, a No. 2 belt ply 12, a No. 3 belt ply 13, a corrugated zero-degree belt 14, and a shoulder wedge 15.

A method of using corrugated zero-degree belt to manufacture a tire, comprising the steps of:
(1) Preparing corrugated belt strips: design special extrusion die to extrude corrugated belt strips with density lower than ordinary zero-degree belt ply;
(2) Reeling up corrugated belt strips: the extruded corrugated zero-degree belt ply is wrapped and reeled up by a plastic film with better preservation effect;
(3) Jointing belt ply: centring the first, second and third belt plies according to the normal belt structure;
(4) Winding corrugated zero-degree belt: the first layer of corrugated belt is wound at the corresponding belt ply position, and the first layer of corrugated belt ply is wound by the winding machine at an angle of 0° -2° with the crown center;
(5) Using the method in the step (4) to wind the second layer of the corrugated belt, and the upper ply and the lower ply are arranged in a staggered manner to form a belt ply with closely doubled density of a single layer, and the end of the belt strips are overlapped by 0-30mm.

A belt strip with width of 25-50mm (35mm is preferred), and halved density of the ordinary product is prepared using the new extrusion die.

Parallel winding is carried out above, below, or between the belt plies along the circumferential direction of the tire.

The upper ply and the lower ply are arranged in a staggered manner, and the dislocation value is half of the distance between the centers of two adjacent cords in the single layer belt;

Belt ply overlapping mode: For the winding structure above the belt plies, the overlapping length is also 30mm based on the existing form of the corrugated belt ply. For the structure below or between the belt plies, the two ends of the belt strip are at the same level, forming a complete cycle.

## Claims

1. A belt ply structure of a pneumatic all-steel radial tire, wherein the belt ply structure comprises a No. 1 belt ply (11), a No. 2 belt ply (12), a No. 3 belt ply (13), a corrugated zero-degree belt (14), and a shoulder wedge (15).

2. A method of using corrugated zero-degree belt to manufacture a tire, comprising the steps of:
(1) preparing corrugated belt strips: design special extrusion die to extrude corrugated belt strips with density lower than ordinary zero-degree belt ply;
(2) reeling up corrugated belt strips: the extruded corrugated zero-degree belt ply is wrapped and reeled up by a plastic film with better preservation effect;
(3) jointing belt ply: centring the first, second and third belt plies according to the normal belt structure;
(4) winding corrugated zero-degree belt: the first layer of corrugated belt is wound at the corresponding belt ply position, and the first layer of corrugated belt ply is wound by the winding machine at an angle of 0° -2° with the crown center;
(5) using the method in the step (4) to wind the second layer of the corrugated belt, and the upper ply and the lower ply are arranged in a staggered manner to form a belt ply with closely doubled density of a single layer, and the end of the belt strips are overlapped by 0-30mm.

3. The method, as recited in Claim 2, wherein the belt strip with width of 25-50mm, preferably with width of 35mm, and halved density of the ordinary product is prepared using the new extrusion die.

4. The method, as recited in Claim 2, wherein parallel winding is carried out above, below, or between the belt plies along the circumferential direction of the tire.

5. The method, as recited in Claim 2, wherein the upper ply and the lower ply are arranged in a staggered manner, and the dislocation value is half of the distance between the centers of two adjacent cords in the single layer belt.

6. The method, as recited in Claim 2, wherein belt ply overlapping mode: for the winding structure above the belt plies, the overlapping length is also 30mm based on the existing form of the corrugated belt ply. For the structure below or between the belt plies, the two ends of the belt strip are at the same level, forming a complete cycle.
